# FASCICULE DE BREVET EUROPEEN

(11) **EP 1 055 556 B1**
(45) Date de publication et mention de la délivrance du brevet: **25.04.2007**
(21) Numéro de dépôt: 00401300.9
(22) Date de dépôt: 12.05.2000
(51) Int. Cl.: B60Q 1/068, F21V 14/04

(54) **Projecteur à faisceau réglable, notamment pour véhicule automobile**
Scheinwerfer mit Lichtstrahlsteuerung, insbesondere für Fahrzeuge
Headlamp with adjustable beam, in particular for vehicle

(30) Priorité: 25.05.1999 FR 9906557
(43) Date de publication de la demande: 29.11.2000
(73) Titulaire: VALEO VISION, 93012 Bobigny Cédex (FR)
(72) Inventeur: Dinant, Franck, 93012 Bobigny Cedex (FR)
(74) Mandataire: Lemaire, Marc

(56) Documents cités:
- EP-A- 0 512 793
- DE-A- 19 546 271
- FR-A- 2 544 463
- FR-A- 2 639 588

## Description

La présente invention concerne un projecteur à faisceau réglable, notamment pour véhicule automobile.

De façon classique, un projecteur comporte un boîtier fermé à l'avant par une glace transparente. Le boîtier reçoit une lampe et un réflecteur qui coopèrent pour former un faisceau lumineux. On prévoit généralement de pouvoir modifier l'angle d'émission de ce faisceau par le réglage de la position du réflecteur par rapport au boîtier. Un projecteur de ce type est décrit par exemple dans la demande de brevet EP 0 847 894.

Il est également connu de la demande de brevet DE 195 46 271 une liaison entre vis de réglage et réflecteur, où la vis vient en prise avec un filetage constitué par une coquille filetée sur le réflecteur : la vis de réglage étant maintenue en appui dans cette coquille.

Il est également connu de la demande de brevet FR 2 544 463 une liaison entre vis de réglage et réflecteur, utilisant deux crémaillères maintenues en appui sur deux pignons solidaires chacun d'un arbre transversal porté par le boîtier.

L'invention a pour objet de proposer un projecteur du type précité dont le nombre de pièces soit réduit et dont le montage soit simplifié.

Dans ce but, il est proposé un projecteur, notamment pour véhicule automobile, comportant un boîtier, un réflecteur monté à rotation dans le boîtier et des moyens de réglage de la position du réflecteur par rapport au boîtier, caractérisé en ce que les moyens de réglage comprennent un secteur de roue dentée solidaire du réflecteur qui coopère avec une vis montée à rotation dans le boîtier, et en ce que le secteur de roue dentée et la vis sont réalisés de telle sorte qu'ils sont en contact élastique.

La coopération de la vis et du secteur de roue dentée (système type vis sans fin) est réalisée par simple rapprochement, ce qui permet une grande simplicité dans le montage de l'ensemble.

Avantageusement, la vis est flexible, ce qui permet d'une part d'assurer l'engrènement du filetage de la vis sur la route dentée et d'autre part d'éviter la détérioration du système de transmission du mouvement lorsque l'opérateur arrive en butée (comme expliqué en détail dans la suite). L'invention propose notamment les dispositions particulières suivantes, dont les avantages apparaîtront à la lumière de la description:
- la vis est réalisée en matière plastique;
- il est prévu des moyens de butée par simple contact du réflecteur avec le boîtier;
- la vis comporte un bouton de commande;
- la vis possède des moyens d'encliquetage sur le boîtier;
- la vis porte des moyens d'étanchéité venus de matière;
- le boîtier possède un évidement en regard du filetage de la vis;
- le secteur de roue dentée est monté sur le réflecteur par l'intermédiaire d'un berceau;
- le secteur de roue dentée est monté directement sur le réflecteur;
- le secteur de roue dentée est réalisé d'une pièce avec le réflecteur;
- le réflecteur définit un axe optique, le réflecteur est mobile autour d'un axe de rotation et la vis s'étend selon une direction essentiellement perpendiculaire à l'axe optique et à l'axe de rotation.

L'invention sera à présent décrite en référence aux dessins annexés dans lesquels :
- la figure 1 est une vue en coupe d'un projecteur selon l'invention;
- la figure 2 est une vue agrandie de la vis de réglage du projecteur de la figure 1 et de sa fixation sur le boîtier;
- la figure 3 représente en détail le glissement du filetage sur le route dentée lorsque la butée est atteinte;
- la figure 4 représente le boîtier dans une variante de réalisation;
- la figure 5 représente une vis de réglage adaptée à la variante de réalisation du boîtier représenté à la figure 4.

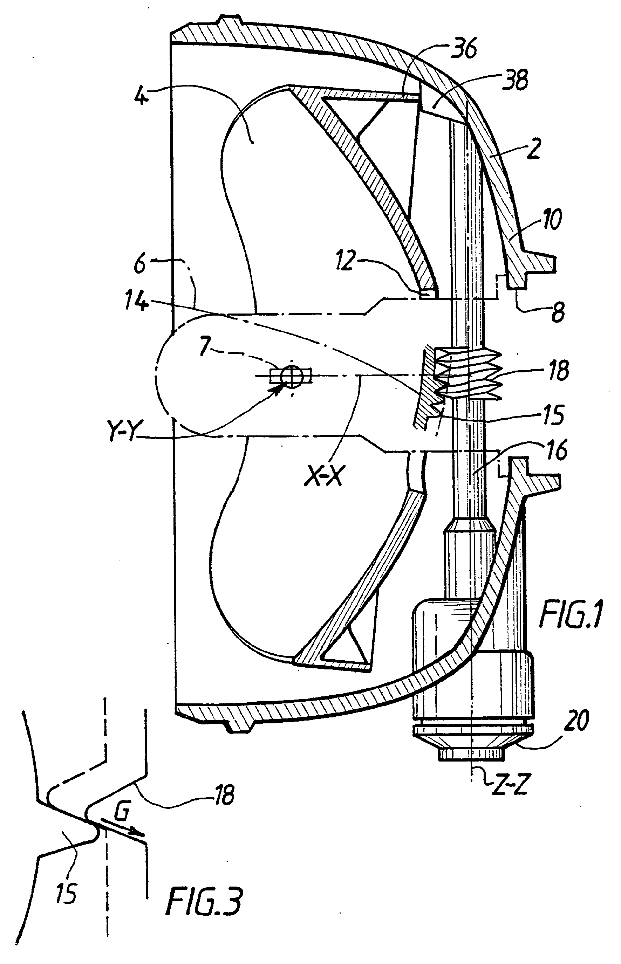

Le projecteur représenté à la figure 1 comporte un boîtier 2 fermé à l'avant par une glace (non représentée). La glace peut éventuellement être montée sur le boîtier 2 avec interposition d'une pièce intermédiaire, comme décrit dans la demande de brevet EP 0 847 894.

Un réflecteur 4 est monté à rotation autour d'un axe Y-Y dans le boîtier 2, par exemple à l'aide de pions saillants du réflecteur 4 reçus dans des ouvertures complémentaires du boîtier 2.

On pourrait également prévoir d'interposer un berceau entre le réflecteur 4 et le boîtier 2 : dans ce cas, le berceau est monté à rotation dans le boîtier et le réflecteur est monté fixe sur le berceau. Pour simplifier la description, on traitera dans la suite le cas d'un projecteur sans berceau: on comprendra toutefois que l'invention s'applique aux projecteurs avec berceau dans lesquels on considérera que le berceau fait partie du réflecteur.

Une lampe 6 est montée fixe dans une ouverture 8 de la paroi arrière du boîtier 10. La lampe 6 traverse un trou de fond 12 pratiqué dans le réflecteur 4 de telle sorte que le filament 7 de la lampe 6 se situe dans la concavité du réflecteur 4. On pourrait également prévoir de monter la lampe directement sur le trou de fond 12 du réflecteur 4.

La lumière émise par le filament 7 de la lampe 6 est réfléchie sous la forme d'un faisceau lumineux qui possède une direction générale proche de l'axe optique X-X du réflecteur 4.

Une roue dentée, ou comme représenté, un secteur de roue dentée 14 est monté sur le réflecteur 4, directement ou par l'intermédiaire d'une pièce appelée berceau (non représentée). L'axe du secteur de roue dentée 14 est confondu (ou très proche) de l'axe de rotation Y-Y du réflecteur 4.

Une vis 16 (vis de réglage) est monté à rotation selon son axe propre Z-Z dans le boîtier 2. La vis 16 possède au moins sur une partie de sa longueur un filetage 18 au moyen duquel elle coopère avec la route dentée 14.

La vis 16 est flexible selon des directions orthogonales à son axe propre Z-Z. Pour ce faire, la vis 16 est par exemple réalisée en matière plastique. On réalise ainsi un contact élastique qui permet notamment de compenser des tolérances qui existerait dans le positionnement des pièces.

Le boîtier 2 est de forme générale concave, sa concavité étant tournée selon l'axe optique X-X. L'axe Z-Z de la vis 16, l'axe optique X-X et l'axe de rotation Y-Y du réflecteur 4 sont perpendiculaires deux à deux.

Lorsque la vis 16 est entraînée en rotation (par un opérateur), le filetage coopère avec le secteur de roue dentée 14 selon le principe de la vis sans fin; le secteur de roue dentée 14, et donc le réflecteur 4 qui est solidaire du secteur de roue dentée 14. sont ainsi entraînés en rotation autour de l'axe Y-Y, ce qui permet le réglage du faisceau.

Le réflecteur 4 comporte sur sa face arrière (i.e. sa face non optiquement active) une protubérance 36 apte à venir en contact avec une butée 38 formée dans le boîtier 2 afin de limiter les possibilités de mouvement du réflecteur 4 dans un sens, par simple contact du réflecteur 4 avec le boîtier 2.

On peut bien sûr prévoir des moyens pour limiter le mouvement du réflecteur dans les deux sens.

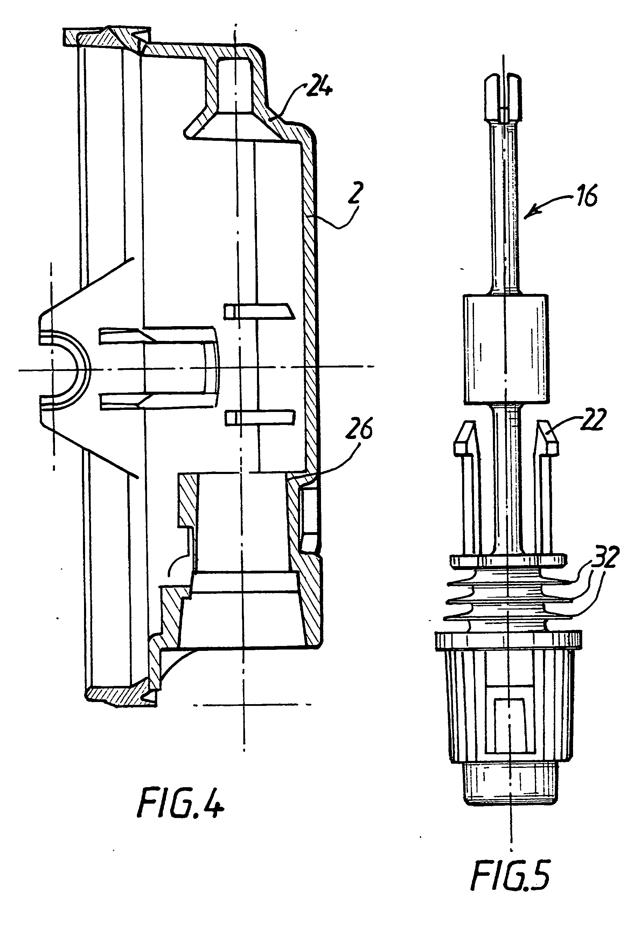

Lorsque le réflecteur 4 vient au contact de la butée 38, la poursuite du mouvement de rotation de la vis 16 ne risque pas de détériorer la liaison vis-roue dentée; en effet, grâce à la flexibilité de la vis 16, il se produit alors un glissement du filetage 18 sur les dents 15 du secteur de roue dentée 14 (voir figure 3). Si le mouvement de rotation est encore poursuivi, chaque dent en prise 15 saute dans le filet voisin où elle se trouvait précédemment. La rotation de la vis 16 peut donc être poursuivie à volonté sans détérioration du système de transmission du mouvement.

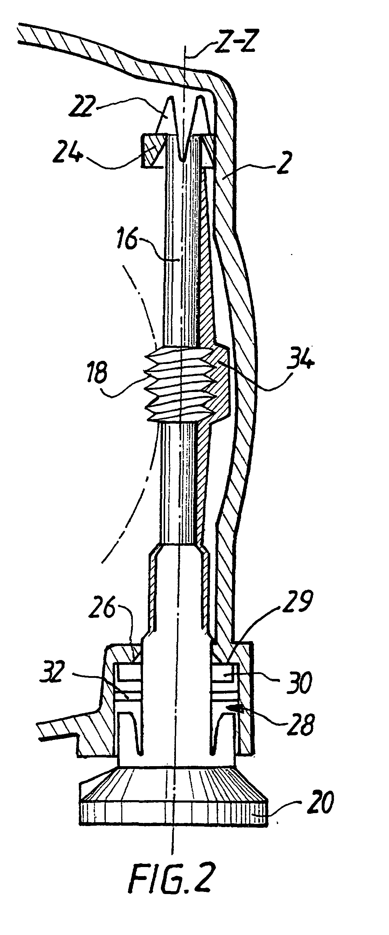

En référence à la figure 2, le montage de la vis 16 dans le boîtier 2 va à présent être plus précisément décrit.

La vis 16 comporte à une extrémité extérieure au boîtier 2 un bouton de commande 20. A l'autre extrémité, intérieure au boîtier 2, la vis 16 possède des ergots 22 d'encliquetage sur un palier 24 issu du boîtier 2. La vis 16 s'étend à travers une cavité 28 globalement cylindrique d'axe Z-Z, venue de matière avec le boîtier 2 et ouverte vers l'extérieur. La cavité 28 communique (en l'absence de la vis 16) avec l'intérieur du boîtier 2 au moyen d'un passage 26 formé dans le fond 29 de la cavité et qui forme un palier pour la vis 16. La vis 16 possède une excroissance radiale 30 qui forme butée et permet, avec les ergots 22, le positionnement axial de la vis 16 dans le boîtier 2.

La vis 16 porte au niveau de la cavité 28 une membrane 32, de préférence venue de matière et de section légèrement supérieure à celle de la cavité cylindrique 28, qui constitue des moyens pour fermer à étanchéité le boîtier 2.

On remarquera que le boîtier 2 possède un évidement 34 en regard du filetage 18 de façon à éviter tout contact entre la vis 16 et le boîtier 2 lorsque la vis 16 est fléchie.

Le montage de la vis 16 dans le boîtier 2 est donc particulièrement simple : l'extrémité de la vis 16 qui porte les ergots 22 est introduite dans la cavité 28 puis à travers le passage 26. On poursuit ce mouvement jusqu'à ce que les ergots 22 arrivent au niveau du palier 24. Par une simple pression, les ergots 22 sont encliquetés dans le palier 24; l'excroissance radiale 30 entre alors en contact avec le fond 29 de la cavité 28. La vis 16 est alors positionnée axialement et libre en rotation. L'étanchéité est automatiquement assurée par la membrane 32.

Une fois la vis 16 montée dans le boîtier 2, il suffit de monter le réflecteur 4 dans la concavité du boîtier 2 pour que le secteur de roue dentée 14 solidaire du réflecteur 4 vienne en prise avec le filetage de la vis 16. Le montage du réflecteur 4 et l'assemblage des moyens de réglage (secteur de roue dentée 14 - vis 16) sont donc simultanés. On a vu par ailleurs qu'avantageusement le bon assemblage des moyens de réglage est assuré par la flexibilité de la vis 16.

Selon une variante de réalisation représentée aux figures 4 et 5, l'extrémité de la vis 16 intérieure au boîtier porte uniquement des moyens de guidage dans le palier 24. Les ergots 22 d'encliquetage sont réalisés environ à mi-longueur de la vis 16 de telle sorte qu'ils viennent en prise sur la paroi interne du boîtier 2 à l'endroit où débouche le passage 26.

L'invention n'est bien sûr pas limitée au mode de réalisation qui vient d'être décrit.

## Revendications

1. Projecteur, notamment pour véhicule automobile, comportant un boîtier (2), un réflecteur (4) monté à rotation dans le boîtier et des moyens de réglage de la position du réflecteur (4) par rapport au boîtier (2), **caractérisé en ce que** les moyens de réglage comprennent un secteur de roue dentée (14) solidaire du réflecteur (4) qui coopère avec une vis (16) montée à rotation dans le boîtier (2), et **en ce que** le secteur de roue dentée (14) et la vis (16) sont réalisés de telle sorte qu'ils sont en contact élastique.

2. Projecteur selon la revendication 1, **caractérisé en ce que** la vis (16) est flexible.

3. Projecteur selon la revendication 2, **caractérisé en ce que** la vis (16) est réalisée en matière plastique.

4. Projecteur selon la revendication 1 à 3, **caractérisé en ce qu'**il est prévu des moyens de butée par simple contact du réflecteur (4) avec le boîtier (2).

5. Projecteur selon l'une des revendications précédentes, **caractérisé en ce que** la vis (16) comporte un bouton de commande (20).

6. Projecteur selon l'une des revendications précédentes, **caractérisé en ce que** la vis (16) possède des moyens d'encliquetage (22) sur le boîtier (2).

7. Projecteur selon l'une des revendications précédentes, **caractérisé en ce que** la vis (16) porte des moyens d'étanchéité (32) venus de matière.

8. Projecteur selon l'une des revendications précédentes, **caractérisé en ce que** le boîtier (2) possède un évidement (34) en regard du filetage (18) de la vis (16).

9. Projecteur selon l'une des revendications précédentes, **caractérisé en ce que** le secteur de roue dentée (14) est monté sur le réflecteur (4) par l'intermédiaire d'un berceau.

10. Projecteur selon l'une des revendications 1 à 9, **caractérisé en ce que** le secteur de roue dentée (14) est monté directement sur le réflecteur (4).

11. Projecteur selon l'une des revendications 1 à 9, **caractérisé en ce que** le secteur de roue dentée (14) est réalisé d'une pièce avec le réflecteur (4).

12. Projecteur selon l'une des revendication précédentes, **caractérisé en ce que** le réflecteur (4) définit un axe optique (X-X), **en ce que** le réflecteur (4) est mobile autour d'un axe de rotation (Y-Y) et **en ce que** la vis (16) s'étend selon une direction (Z-Z) essentiellement perpendiculaire à l'axe optique (X-X) et à l'axe de rotation (Y-Y).

## Claims

1. Headlight, in particular for a motor vehicle, comprising a housing (2), a reflector (4) which is fitted such as to rotate in the housing, and means for adjustment of the position of the reflector (4) relative to the housing (2), **characterised in that** the adjustment means comprise a segment of a toothed wheel (14) integral with the reflector (4), which segment co-operates with a screw (16) which is fitted such as to rotate in the housing (2), and **in that** the segment of toothed wheel (14) and the screw (16) are produced such that they are in resilient contact.

2. Headlight according to claim 1, **characterised in that** the screw (16) is flexible.

3. Headlight according to claim 2, **characterised in that** the screw (16) is made of plastics material.

4. Headlight according to any one of claims 1 to 3, **characterised in that** stop means are provided which involve simple contact of the reflector (4) with the housing (2).

5. Headlight according to any one of the preceding claims, **characterised in that** the screw (16) comprises a control knob (20).

6. Headlight according to any one of the preceding claims, **characterised in that** the screw (16) has means (22) for locking on to the housing (2).

7. Headlight according to any one of the preceding claims, **characterised in that** the screw (16) supports integral sealing means (32).

8. Headlight according to any one of the preceding claims, **characterised in that** the housing (2) has a recess (34) opposite the thread (18) of the screw (16).

9. Headlight according to any one of the preceding claims, **characterised in that** the segment of toothed wheel (14) is fitted on the reflector (4) by means of a cradle.

10. Headlight according to any one of claims 1 to 9, **characterised in that** the segment of toothed wheel (14) is fitted directly on the reflector (4).

11. Headlight according to any one of claims 1 to 9, **characterised in that** the segment of toothed wheel (14) is integral with the reflector (4).

12. Headlight according to any one of the preceding claims, **characterised in that** the reflector (4) defines an optical axis (X-X), the reflector (4) is movable around an axis of rotation (Y-Y) and the screw (16) extends in a direction (Z-Z) which is substantially perpendicular to the optical axis (X-X) and to the axis of rotation (Y-Y).

## Patentansprüche

1. Scheinwerfer, insbesondere für Kraftfahrzeuge, mit einem Gehäuse (2), einem in dem Gehäuse drehbar gelagerten Reflektor (4) und Mitteln zum Verstellen der Position des Reflektors (4) bezüglich des Gehäuses (2),
**dadurch gekennzeichnet, dass** die Stellmittel ein mit dem Reflektor (4) fest verbundenes Zahnsegment (14) umfassen, das mit einer in dem Gehäuse (2) drehbar gelagerten Schraube (16) zusammenwirkt, und dass das Zahnsegment (14) und die Schraube (16) solchermaßen ausgeführt sind, dass sie miteinander in elastischem Kontakt sind.

2. Scheinwerfer nach Anspruch 1,
**dadurch gekennzeichnet, dass** die Schraube (16) flexibel ist.

3. Scheinwerfer nach Anspruch 2,
**dadurch gekennzeichnet, dass** die Schraube (16) aus Kunststoff besteht.

4. Scheinwerfer nach Anspruch 1 bis 3,
**dadurch gekennzeichnet, dass** Anschlagmittel durch einfachen Kontakt des Reflektors (4) mit dem Gehäuse (2) vorgesehen sind.

5. Scheinwerfer nach einem der vorhergehenden Ansprüche,
**dadurch gekennzeichnet, dass** die Schraube (16) einen Bedienungsknopf (20) aufweist.

6. Scheinwerfer nach einem der vorhergehenden Ansprüche,
**dadurch gekennzeichnet, dass** die Schraube (16) Mittel (22) zum Einrasten am Gehäuse (2) umfasst.

7. Scheinwerfer nach einem der vorhergehenden Ansprüche,
**dadurch gekennzeichnet, dass** die Schraube (16) materialeinheitlich ausgebildete Dichtungsmittel (32) aufweist.

8. Scheinwerfer nach einem der vorhergehenden Ansprüche,
**dadurch gekennzeichnet, dass** das Gehäuse (2) eine Aussparung (34) gegenüber dem Gewinde (18) der Schraube (16) besitzt.

9. Scheinwerfer nach einem der vorhergehenden Ansprüche,
**dadurch gekennzeichnet, dass** das Zahnsegment (14) mittels einer Halterung auf dem Reflektor (4) angebracht ist.

10. Scheinwerfer nach einem der Ansprüche 1 bis 9,
**dadurch gekennzeichnet, dass** das Zahnsegment (14) unmittelbar auf dem Reflektor (4) montiert ist.

11. Scheinwerfer nach einem der Ansprüche 1 bis 9,
**dadurch gekennzeichnet, dass** das Zahnsegment (14) einstückig mit dem Reflektor (4) ausgeführt ist.

12. Scheinwerfer nach einem der vorhergehenden Ansprüche,
**dadurch gekennzeichnet, dass** der Reflektor (4) eine optische Achse (X-X) definiert, dass der Reflektor (4) um eine Drehachse (Y-Y) herum beweglich ist und dass sich die Schraube (16) in eine Richtung (Z-Z) erstreckt, die zu der optischen Achse (X-X) und zu der Drehachse (Y-Y) im Wesentlichen lotrecht ist.
